# EUROPEAN PATENT APPLICATION

(11) **EP 4 130 931 A1**
(43) Date of publication of application: **08.02.2023**
(21) Application number: 21189489.4
(22) Date of filing: 03.08.2021
(51) Int. Cl.: G06F 1/16, H04R 1/02

(54) **SPLASH PROOF ELECTRONIC DEVICE**

(71) Applicant: BSH Hausgeräte GmbH, 81739 München (DE)
(72) Inventor: Ellwitz, Tom, 74549 Wolpertshausen (DE); Etzbach, Andrea, 80634 München (DE); Graus Almenar, Javier, 50002 Zaragoza (ES); Sagoo, Kiran Pal, 82256 Fürstenfeldbruck (DE)

(57) **Abstract**

An electronic device (100), in particular a docking station (100), is described, wherein the electronic device (100) comprises a main body (106) which comprises an acoustic chamber with one or more speaker drivers (108, 107) for rendering an audio signal. The electronic device (100) further comprises one or more feet (105, 111) extending downwards from the main body (106) and configured to hold the main body (106) above the ground (160). The main body (106) comprises a speaker grill (608) covering the one or more speaker drivers (108, 107), wherein the speaker grill (608) comprises multiple grill holes (601) which are at least partially oriented towards the ground (160).

## Description

The present document relates to an electronic device, in particular to a docking station, which may be used within a household, notably within a kitchen, to provide support regarding a household task such as cooking.

An electronic device, such as a smart speaker and/or a docking station, may be used within a household, notably within a kitchen, to provide support for a household task, such as cooking, to a user of the electronic device. The user may use the electronic device for playing back an audio signal (e.g., music or audio instructions for a recipe or an answer from a voice assistant).

The electronic device may be exposed to liquids, when used within a kitchen. The present document addresses the technical problem of protecting different components of an electronic device, notably of a docking station, from liquids in an efficient and reliable manner. The technical problem is solved by each one of the independent claims. Preferred examples are described in the dependent claims.

According to an aspect, an electronic device, notably a docking station configured to dock a user device and/or a smart speaker, is described. The electronic device may be designed to be placed on a table or a worktop within a kitchen. Furthermore, the electronic device may be configured to hold a DIN A4 or DIN A5 sized user device (e.g., with a display size of up to 11 inches or 12 inches). For this purpose, the electronic device may comprise a back support.

The electronic device typically comprises at least one active acoustic speaker driver (notably a loudspeaker) which is configured to render an audio signal. The speaker driver may be located in an acoustic chamber formed by a main body of the electronic device. The acoustic chamber and/or the main body may have a cylindrical form. The main body may exhibit a longitudinal axis which may be oriented in parallel to the ground (e.g., a worktop) onto which the electronic device is placed. The main body may e.g., have a diameter between 4cm and 8cm. Furthermore, the main body may e.g., have a length along the longitudinal axis between 10cm and 25cm.

In addition, the electronic device may comprise one or more feet extending downwards from the main body and enabling the main body to be placed on the ground (e.g., a worktop). The one or more (panel-shaped) feet may extend along the longitudinal axis of the main body (e.g., from one end to the other end of the main body). The electronic device may exhibit a front foot at a front side of the electronic device (facing the user of the electronic device, when the user is using the electronic device). Alternatively, or in addition, the electronic device may exhibit a rear foot (at the rear side of the electronic device). By providing one or more feet, the electronic device may be placed on a ground in a stable manner.

The one or more feet may be configured to hold the main body elevated at an elevation distance from the ground. The elevation distance may e.g., be between 1cm and 15cm. By positioning the main body (which comprises one or more speaker drivers, e.g., loudspeakers) at a certain elevation distance from the ground, an electronic device having a high audio quality and intelligibility may be provided. Furthermore, by holding the main body elevated from the ground, the main body may be protected from liquids on the ground in an efficient and reliable manner.

As indicated above, the (elevated) main body may comprise one or more (active or passive) speaker drivers for rendering an audio signal. The one or more radiators are preferably oriented at least partially towards the ground. In particular, the one or more speaker drivers may be arranged such that a main emission direction of an audio signal that is emitted by the one or more speaker drivers is oriented towards the ground. By way of example, the main emission direction may form an angle with ground having a magnitude which is greater than 0°, notably greater than 20°.

By providing an electronic device having an elevated main body with one or more speaker drivers that are oriented towards the ground that the electronic device is standing on, the quality and the intelligibility of emitted audio signals may be increased, thereby increasing the comfort-of-use of the electronic device.

As indicated above, the electronic device may comprise a back support. The back support may extend upwards from the main body, enabling a user device to be placed in conjunction with and/or onto the electronic device. The back support may exhibit an angle between 45° and 75° relative to the ground that the electronic device is standing on. The back support may form a flat backplane which is at least partially in contact with the backside of a (flat) user device that is placed onto the electronic device. In other words, the back support may hold a user device from the back.

The electronic device may be designed such that the back support can be detached from the main body or attached to the main body by a user of the electronic device (e.g., using one or two hands). In particular, detaching and/or attaching may be performed without using a tool. As a result of this, a particularly comfortable electronic device may be provided.

Hence, an electronic device is described which comprises a main body, wherein the main body may comprise an acoustic chamber with one or more (active and/or passive) speaker drivers for rendering an audio signal. Furthermore, the electronic device may comprise one or more feet extending downwards from the main body and configured to hold the main body above the ground that the electronic device is standing on.

The electronic device may comprise one or more means for protecting the electronic device from environmental influences, such as liquid, humidity, dust, etc.

The main body may comprise a speaker grill covering the one or more speaker drivers, wherein the speaker grill may be located at the cylindrical surface of the cylindrical housing of the main body.

The speaker grill typically comprises multiple grill holes, wherein the grill holes may at least partially be oriented towards the ground that the electronic device is standing on. In particular, the grill holes may be oriented such that gravity causes liquid to flow from the acoustic chamber through the grill holes towards the outer surface of the speaker grill, when the electronic device is placed on the ground. Alternatively, or in addition, the grill holes may be such that the longitudinal axis of the grill holes is oriented (downwards towards the ground) at an angle between 45° and 90° with respect to the ground that the electronic device is standing on. As a result of this, the electronic device, in particular the acoustic chamber, may be protected from water splashing in an efficient and reliable manner.

The housing of the main body may comprise an opening, in particular a window, for a light element (notably for a light emitting diode, LED) and/or for a gesture sensor which are placed within the housing of the main body (behind the respective opening). The electronic device may comprise a, in particular at least partially transparent, layer (e.g., a tape) at the (inner) surface of the housing of the main body. The layer may be configured to cover the opening such that the layer is located between the light element and/or the gesture sensor and the opening. The layer may be fixed to the surface of the housing using an adhesive. As a result of this, the light element and/or the gesture sensor may be protected from water splashing in an efficient and reliable manner.

The main body may comprise one or more microphones (e.g., a microphone array) which are positioned behind one or more corresponding microphone openings within the housing of the main body. The one or more microphones may each be covered by a mesh, in particular a metallic mesh, configured to protect the one or more microphones from water and/or dust. The mesh covering a microphone may be located between the inner surface of the housing of the main body and the microphone, thereby protecting the microphone in an efficient and reliable manner.

The electronic device may comprise one or more control elements (e.g., control buttons) at the housing of the main body as part of a user interface of the electronic device. The one or more control elements may each be implemented using a capacitive touch sensor which is located at the inner surface of the housing of the main body. Furthermore, a (in particular, each) control element may comprise an embossed section at the outer surface of the housing of the main body, which is aligned with the corresponding touch sensor at the inner surface of the housing of the main body. By doing this, the main body may be protected from water and dust in an efficient and reliable manner.

The electronic device may comprise a light guide which is heat staked to the housing of the main body, thereby protecting the main body from water and dust in an efficient and reliable manner. The light guide may be coupled to a light element (e.g., a LED) which is configured to couple light into the light guide such that the light is visible at the outer surface of the housing of the main body.

The housing of the main body may be covered by a material having a VDI 30 texture. Alternatively, or in addition, the housing of the main body may be covered by an anti-fingerprint material. By doing this, the comfort-of-use of the electronic device may be improved.

As indicated above, the electronic device may comprise a holder, notably a back support, extending upwards from the main body and enabling a handheld user device (e.g., a tablet PC or a smartphone) to be placed onto the electronic device. The holder, in particular the back support, may form a support angle, notably a support angle between 45° and 70°, with respect to the ground that the electronic device is standing on. The holder may comprise, in particular may be covered with, UV (ultraviolet light) treated silicone. By doing this, the comfort-of-use of the electronic device may be improved. In particular dust attraction may be improved.

The acoustic chamber is preferably sealed such that water entering the housing of the main body through the speaker grill cannot enter the acoustic chamber. By doing this, the water protection of the electronic device can be further improved.

As indicated above, the main body may extend along a longitudinal axis which is parallel to the ground that the electronic device is standing on. The electronic device may comprise a panel-shaped front foot which extends downwards from the main body at the front side of the electronic device. Furthermore, the electronic device may comprise a panel-shaped rear foot which extends downwards from the main body at the rear side of the electronic device.

In addition, the electronic device may comprise an electronics housing which encloses an electronics board of the electronic device. The electronics housing may be located below the panel-shaped front foot and the panel-shaped rear foot. In particular, the panel-shaped front foot and/or the panel-shaped rear foot each may form a wall of the electronics housing.

The panel-shaped front foot and/or the panel-shaped rear foot may form a protective roof for the electronics housing, in particular for a data and/or power interface (such as a USB interface) located at a side wall of the electronics housing (wherein the side wall is typically perpendicular to the longitudinal axis of the main body). In particular, the panel-shaped front foot and/or the panel-shaped rear foot may extend 2cm or more along the longitudinal axis of the main body beyond the side wall of the electronics housing, at which the data and/or power interface is located, to form the protective roof. By providing a protective roof, water entering the electronics housing through the data and/or power interface may be prevented in an efficient and reliable manner.

The data and/or power interface at the side wall of the electronics housing may be positioned below the electronics board, when the electronic device is standing on the ground. As a result of this, the electronics board may be protected from water in a particularly reliable manner. In particular, this ensures that water which enters the housing via the data and/or power interface cannot reach the electronics board.

The (panel-shaped) back support may be configured to be placed within a strip-shaped gap that extends along the longitudinal axis of the main body. The gap may at least partially be covered with Mylar material configured to prevent water from entering the electronics housing of the electronic device, which is positioned below the gap. Alternatively, or in addition, one or more screws within the gap may (each) exhibit a rubber sealing configured to prevent water from entering the electronics housing. As a result of this, the electronics board of the electronic device may be protected from water in a particularly reliable manner.

The front foot and the rear foot may be such that the lower side of the electronics housing (which is oriented towards the ground) is held at an elevation distance from the ground that the electronic device is standing on. As a result of this, the electronics board of the electronic device may be protected from water in a particularly reliable manner.

The electronic housing may comprise at the lower side which is oriented towards the ground that the electronic device is standing on one or more cable channels and/or a power plug which are elevated from the ground that the electronic device is standing on.

As a result of this, electronic components of the electronic device may be protected from water in a particularly reliable manner.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
- Figure 1a: shows a (smart) docking station in a perspective view;
- Figure 1b: shows an example docking station in a side view;
- Figure 1c: shows a front view of the docking station;
- Figure 2a: shows an example LED strip;
- Figure 2b: shows an example adhesive layer for protecting one or more LEDs;
- Figure 3a: shows an example microphone array;
- Figure 3b: shows an example microphone mesh structure for protecting the microphones
- of: the microphone array;
- Figure 4a: illustrates the use of capacitive touch control elements;
- Figure 4b: shows an example heat staked light guide;
- Figure 5: illustrates example materials for the main body and for the back support;
- Figure 6a: shows a main body comprising a speaker grill which is oriented towards the ground;
- Figure 6b: illustrates example grill holes for the speaker grill, which are oriented towards the ground;
- Figure 7a: illustrates the rear foot of the docking station forming a protective roof for the USB interface;
- Figure 7b: shows a different view of the protective roof;
- Figures 7c and 7d: show example layout parameters of the protective roof;
- Figure 7e: shows the main electronic board of the docking station, which is placed above the USB interface;
- Figure 8a: shows a view of the back support;
- Figures 8b and 8c: illustrate the use of a Mylar layer at the mechanical interface between the back support and the main body;
- Figures 8d and 8e: illustrate the use of rubber pads for sealing a screw coupling;
- Figure 9a: shows an example cable channel for raising a power cable of the docking station from ground;
- Figure 9b: shows an example power plug which is raised from ground; and
- Figure 9c: illustrates the electronics housing of the docking station being raised from ground.

As outlined above, the present document is directed at increasing the reliability and/or the lifespan of a docking station, in particular by rendering the docking station slash proof. The following aspects are described in the context of a docking station. It should be noted that these aspects are also applicable to an electronic device in general.

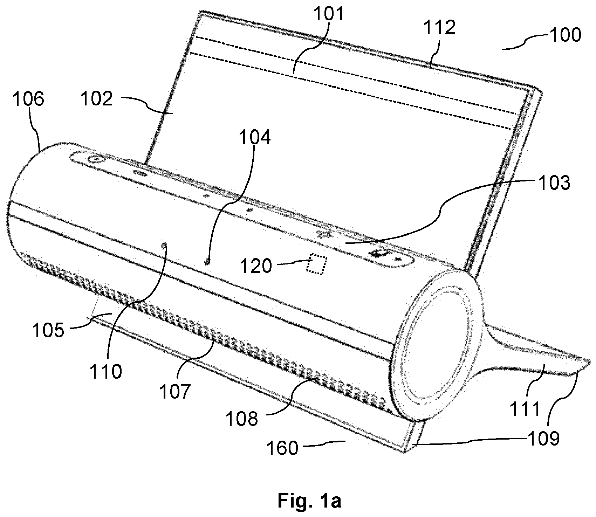

Figs. 1a to 1c show an example docking station 100. The (smart) docking station 100 comprises a main body 106, which may have a cylindrical form as illustrated in Fig. 1a. The main body 106 may comprise one or more electronic components such as a control unit 120, e.g., a microcontroller, of the docking station 100. Furthermore, the main body 106 may comprise a control panel 103 with one or more control elements, notably control buttons. The control panel 103 may enable a user to interact with the docking station 100, e.g., for speaker volume control or for quick touch interaction with the voice assistant (stop listening, start listening).

Alternatively, or in addition to a control panel 103, the docking station 100 may comprise a gesture sensor 104 (located e.g., on the main body 106), which is configured to sense gesture data regarding a (hand) gesture performed by a user of the docking station 100. The docking station 100 may be controlled in dependence of the gesture data (i.e., of the measurement data of the gesture sensor 104). In addition, the docking station 100 may comprise one or more light elements 150, notably light emitting diodes (LED) and/or an LED strip 151, e.g., for providing status information regarding the status of the docking station 100 to a user of the docking station 100.

The main body 106 may further comprise one or more active speaker drivers (which are also referred to herein as loudspeakers) 108 which are configured to emit an audio signal. The one or more loudspeakers 108 may be located at a face side and/or at a shell surface of the (cylindrical) main body 106 or of the (cylindrical) acoustic chamber comprised within the main body 106. The main body 106 may act as and/or may enclose an acoustic chamber for improving the sound quality of the one or more loudspeakers 108. In addition, the docking station 100 may comprise one or more (passive) acoustic radiators 107 on the (cylindrical) surface of the main body 106 and/or at the one or more face sides of the main body 106.

The docking station 100 may comprise one or more base feet 105, 111, notably a base foot 105 at a front side facing the user and/or a rear foot 111 at a rear side of the docking station 100. The one or more base feet 105, 111 may be attached to the main body 106, and may extend from the main body 106 towards the ground 160, onto which the docking station 100 is placed. The one or more base feet 105, 111 may extend along the longitudinal axis of the (cylindrical) main body 106. In particular, the feet 105, 111 may have the form of a plate or plane. As such the feet 105, 111 may be referred to herein as foot plates.

The one or more base feet 105, 111 may each comprise an isolator element 109, e.g., comprising silicone, at the end of the respective foot 105, 111, which is in contact with the ground 160 that the docking station 100 is placed on. The use of an isolator element 109 allows the docking station 100 to be placed in a stable manner, preventing it from sliding over the surface that the docking station 100 is placed on (notably in case of touch interaction with the docking station 100 and/or when audio is played back). Furthermore, the docking station 100 may be isolated against (acoustic) vibrations.

In addition, the docking station 100 may comprise a holder, notably a back support, 102 which extends from the main body 106 upwards (i.e., away from the ground 160 that the docking station 100 is placed on). The back support 102 may exhibit an angle with regards to the ground 160 between 45° and 75°, when the docking station 100 is placed on the ground 160. The back support 102 may be designed as a support for a typical tablet PC (e.g., with a screen size between 8 inches and 13 inches), also being able to support smaller devices such as phones starting at 5 inches. The back support 102 may extend along the longitudinal axis of the main body 106 (from one face to the other face of the main body 106).

The back support 102 may exhibit one or more isolator stripes 101 which may extend horizontally across the back support 102, or may have at least two support pads. Alternatively, or in addition, the back support 102 may comprise a sheet of relatively soft material (e.g., TPU (thermoplastic polyurethane) or silicone) covering the whole front side of the back support 102 or covering the whole back support 102. By covering the entire back support 102 with an isolating material, differently dimensioned electronic devices may be placed on the back support 102 in a flexible manner. Furthermore, the back support 102 may comprise an isolator section 112 at the top end of the back support 102. The use of isolator stripes 101 and/or of an isolator section 112 allows an object, such as a tablet PC, to be placed onto the back support 102 in a stable manner. Furthermore, isolation of acoustic vibrations may be provided.

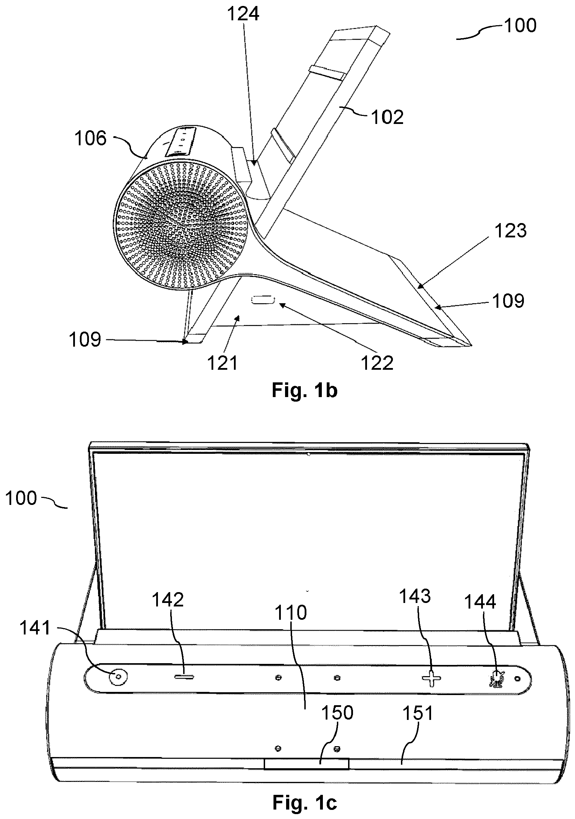

In addition, the docking station 100 may comprise a base support 124, as shown in Fig. 1b, which is located at the contact point between the main body 106 and the back support 102. The base support 124 may form a gap within which the lower edge of a user device, notably of a tablet PC, may be placed, in order to hold the user device in a stable manner on the back support 102. The base support 124 may comprise an isolating material, in order to allow vibrations of the docking station 100 (e.g., due to rending of an audio signal via a loudspeaker 108 of the docking station 100) to be isolated. Alternatively, or in addition, the base support 124 may comprise one or more presence sensors (e.g., weight sensors) for detecting the presence of a user device on the back support 102.

The control unit 120 of the docking station 100 may be configured to automatically establish a communication link with the user device, if it is determined that the user device has been placed in conjunction with, notably into the holder 102 of, the docking station 100. By way of example, a wireless communication link, such as a Bluetooth link, may be established between the docking station 100 and the user device.

Furthermore, the control unit 120 may be configured to receive an audio signal from the user device via the communication link, and to cause one or more speaker drivers 107, 108 of the docking station 100 to render the audio signal that has been received from the user device. Alternatively, or in addition, the control unit 120 may be configured to control the user device via the communication link (e.g., using gesture control and/or speech control).

The docking station 100 may comprise one or more microphones 110, e.g., at the main body 106, which are configured to capture acoustic microphone signals, notably speech signals, e.g., in order to enable speech control of the docking station 100 and/or of a user device (also referred to herein as electronic device) that is coupled with the docking station 100. The docking station 100, notably the control unit 120 of the docking station 100, may be configured to separate an audio signal that has been emitted by the docking station 100 from an acoustic microphone signal that has been captured by the one or more microphones 110 of the docking station 100, thereby enabling a reliable speech control, even when rendering an audio signal. The one or more microphones 110 may be oriented away from the one or more speakers 108 and/or the one or more radiators 107, for enabling a particularly reliable separation of an emitted audio signal from a captured microphone signal.

Figure 1b shows a side view of the docking station 100. The docking station 100 may comprise an electronics housing 121 for one or more electronic components (e.g., for the control unit 120). The housing 121 may be located between the front foot 105 and the rear foot 111 of the docking station 100. Furthermore, the docking station 100 may comprise a data and/or power interface 122 (e.g., a USB interface) for data communication and/or for power supply (e.g., at the housing 121). In addition, the docking station 100 may comprise a section 123 for placing a power cord for a power supply of the docking station 100.

Figure 1c shows a front view of the docking station 100. The main body 106 of the docking station 100 may comprise various different control elements 141, 142, 143, 144 such as a control button 141 for activating or deactivating a virtual assistant, volume buttons 142, 143 and/or an on/off-button 144 for activating and for deactivating the one or more microphones 110.

The docking station 100 is typically dedicated for the use within a kitchen. The docking station 100 may be used in conjunction with a smartphone and/or tablet PC which is placed on the back support 102 of the docking station 100. Furthermore, the docking station 100 may be configured to act standalone as a smart speaker, e.g., for rendering audio signals that are provided by an internet server and/or by a smartphone and/or tablet PC. In the present document different means for rendering the docking station 100 splash proof and/or robust are described. Different techniques are described, such as ingress protection, positioning of one or more (electronic) components of the docking station 100, and/or closed construction of one or more components.

The docking station may be exposed to various different conditions such as water splashing, dirty hands, floating particles in the air, fumes and/or rough handling. For this purpose, the docking station may be at least IP43 certified.

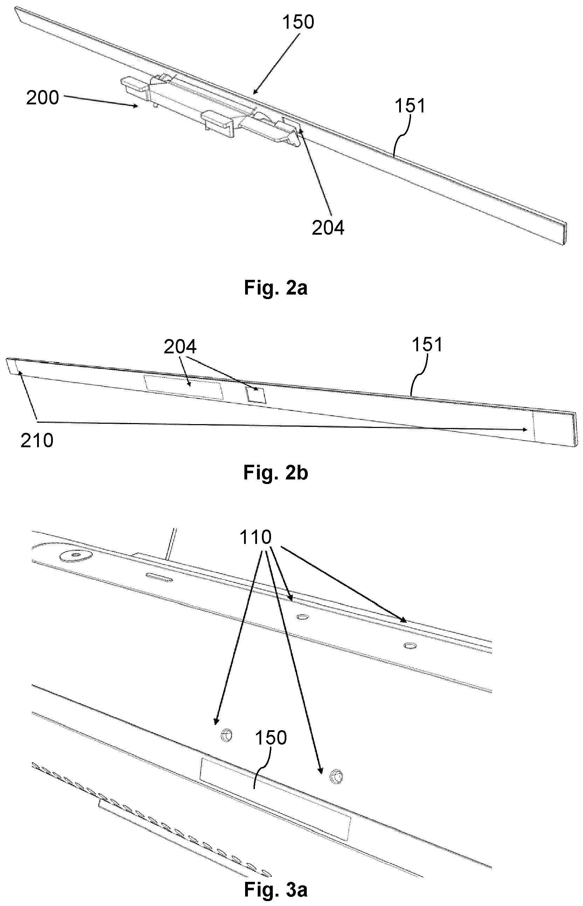

As outlined above, the docking station 100 may comprise one or more light elements 150 which may be positioned on a strip 151, wherein the strip 151 may be arranged (along the longitudinal axis) on the main body 106. As illustrated in Figs. 2a and 2b, a component 200 comprising the light elements 150 and/or the gesture sensor 104 may be arranged behind the strip 151, in particular behind an opening 204 (e.g., a window) within the strip 151. A (transparent) adhesive layer 210 (e.g., a foil) may be attached to the backside of the strip 151, such that the adhesive layer 210 covers the one or more openings 204 for the light elements 150 and/or for the gesture sensor 104. The adhesive layer 210 may be arranged between the backside of the strip 151 and the component 200 which comprises the light elements 150 and/or the gesture sensor 104. As a result of this, the component 200 may be protected in an efficient manner.

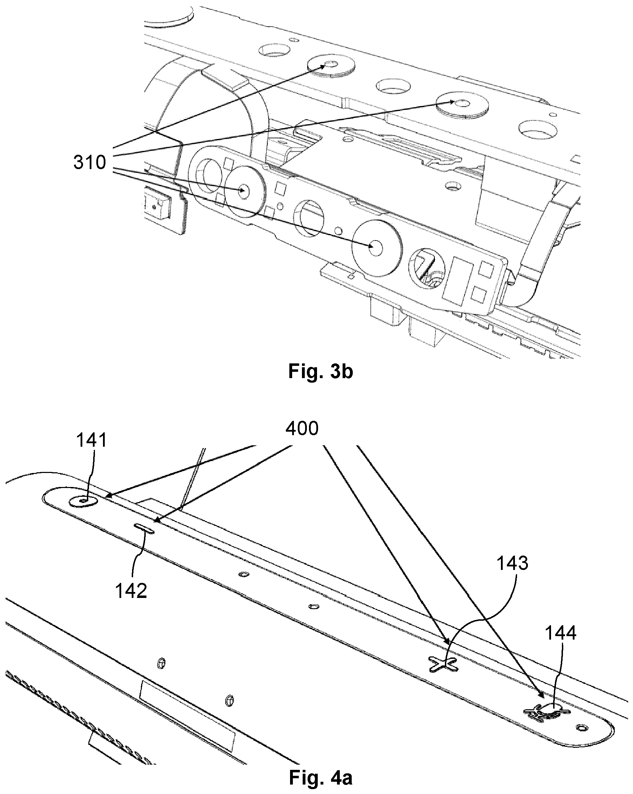

The one or more microphones 110 (e.g., the four microphones of a microphone array) of the docking station 100 may each be covered with a mesh 310 to protect the one or more microphones 110 from dust, water, and other particles (as illustrated in Figure 3a and 3b). By using a mesh 310, the sensing capabilities of the one or more microphones 110 are not impacted, thereby allowing for a reliable voice interaction between a user and the docking station 100.

The one or more control elements 141, 142, 143, 144, notably touch buttons, of the docking station 100 may each be implemented using a capacitive touch sensor 400 (as shown in Fig. 4a). The capacitive touch sensor 400 of the one or more control elements 141, 142, 143, 144 may be hidden under the housing of the main body 106 to avoid any direct contact of the touch sensor 400 with the outside environment. A user may interact with the capacitive touch sensor 400 through respective embossed buttons for the one or more control elements 141, 142, 143, 144. By using one or more capacitive buttons, instead of mechanical buttons, it is ensured in an efficient manner that no water or other particles can enter the housing of the docking station 100 and damage the electronic components of the docking station 100.

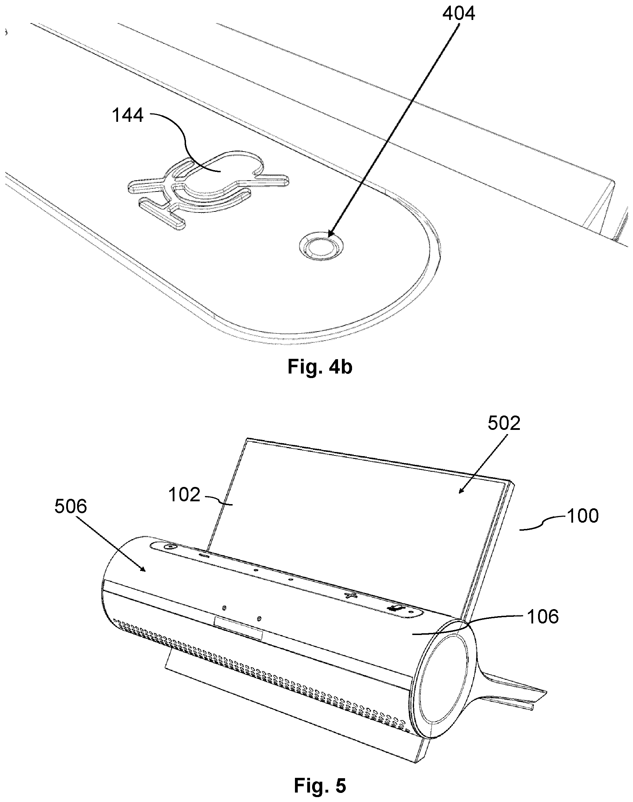

A mic mute light guide 404 (illuminated by an LED) may be placed on the main body 106. The light guide 404 may be heat staked with the housing of the main body 106 to remove any gaps, thereby preventing dirt, water and other contaminants from entering the housing of the main body 106 in a reliable manner (see Fig. 4b).

As illustrated in Fig. 5, the main body 506 of the docking station 100 may exhibit a surface 506 with a VDI (Verein Deutscher Ingeniere) texture 30 which is anti-fingerprint, thereby improving the comfort-of use of the docking station 100 within a kitchen environment. The back support 102 where the user typically places a user device may exhibit a UV treated surface 502 to prevent lint and to allow for easy cleaning of the back support 102.

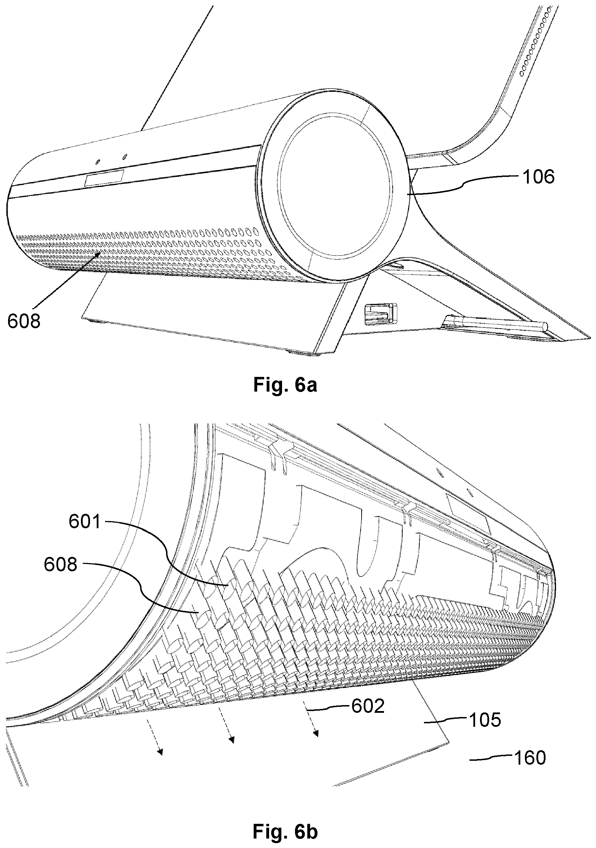

As illustrated in Figures 6a and 6b, the speaker grill holes 601 of the speaker grill 608 of the main body 106 may be angled and designed in a way so as to reduce the amount of water which may pass through the grill holes 601. In particular, the grill holes 601 may be oriented towards the ground 160 (as illustrated by the arrows 602 in Fig. 6b). In particular, the grill holes 601 may have an orientation which is substantially identical to the orientation of the front foot 105. By making use of such an orientation, water which is splashed onto the grill 608 drips out of the holes 601 due to the downward alignment of the holes 601.

The speaker box (comprising the acoustic volume, one or more active drivers 108 and/or one or more passive resonators 107) is preferably completely sealed. As a result of this, even if water splashes through the speaker grill 608 and reaches the speaker box, the water cannot leak inside the speaker box (which is typically positioned within the main body 106. The speaker box is also referred to herein as the acoustic chamber.

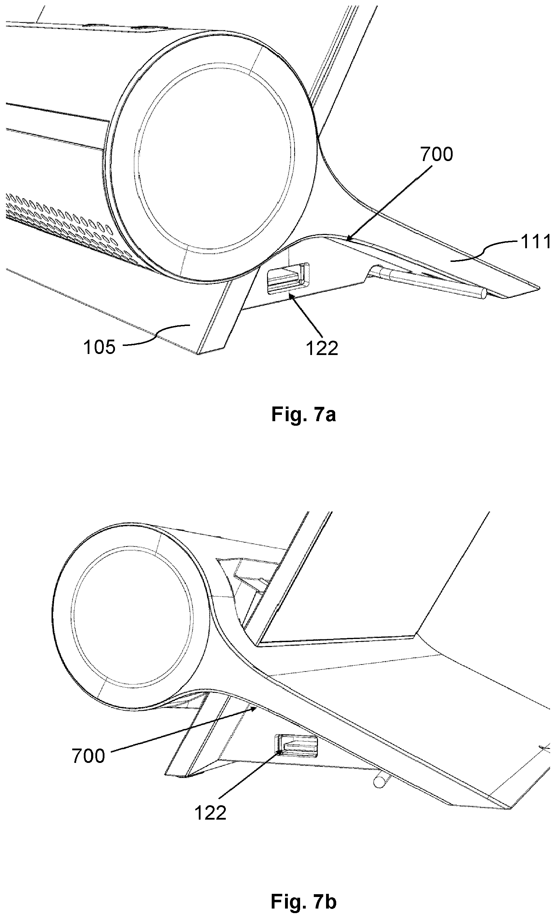

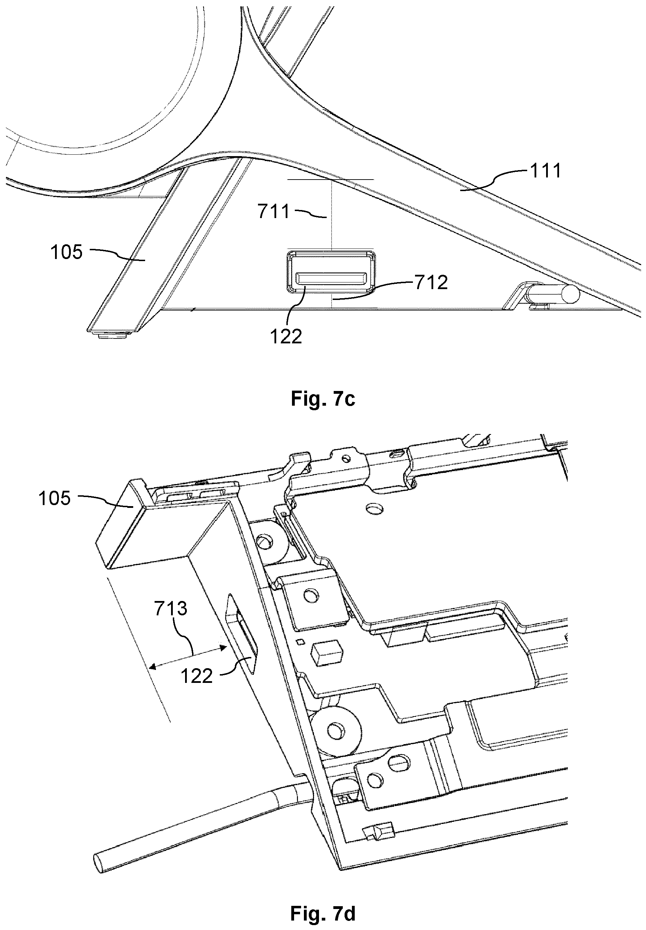

As illustrated in Figs. 7a to 7d, the USB port 122 of the docking station 100 may be located under a protective roof 700 which protects the docking station 100, notably the electronics housing 121 from direct splashes of water. The protective roof 700 may be formed in an efficient manner by the back foot 111 of the docking station 100. The roof 700 may extend beyond the USB port 122 and/or the electronics housing 121 by 2cm or more (indicated by the measure 713). The USB port 122 may be elevated from ground 160 by a certain elevation height 712, thereby protecting the USB port 122 from water on the ground 160. Furthermore, the USB port 122 may have a certain distance 711 from the protective roof 700, in order to allow a user to easily plug in a USB cable.

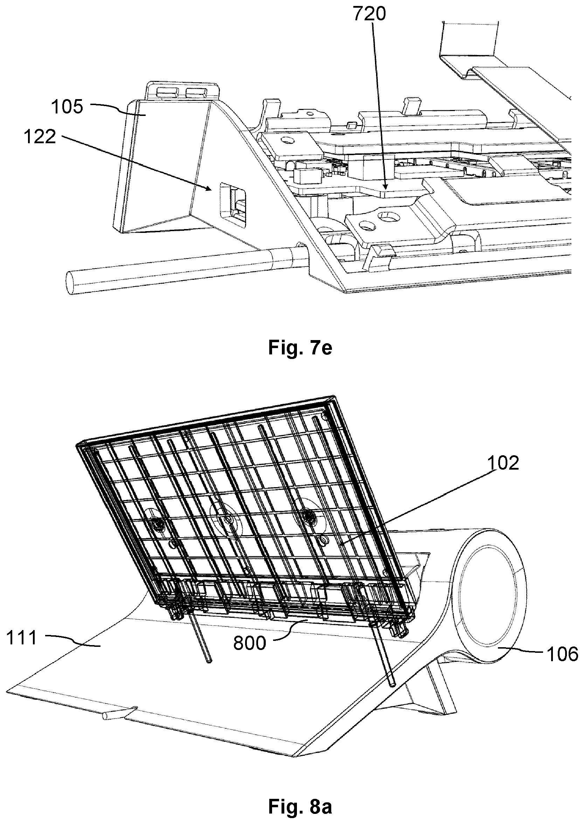

The USB port 122 (i.e., the data and/or power interface of the docking station 100) is preferably positioned below the main electronics board 720 (as shown in Fig. 7e) such that even if water enters vie the USB port 122, the water does not damage the main electronics board 720 of the docking station 100.

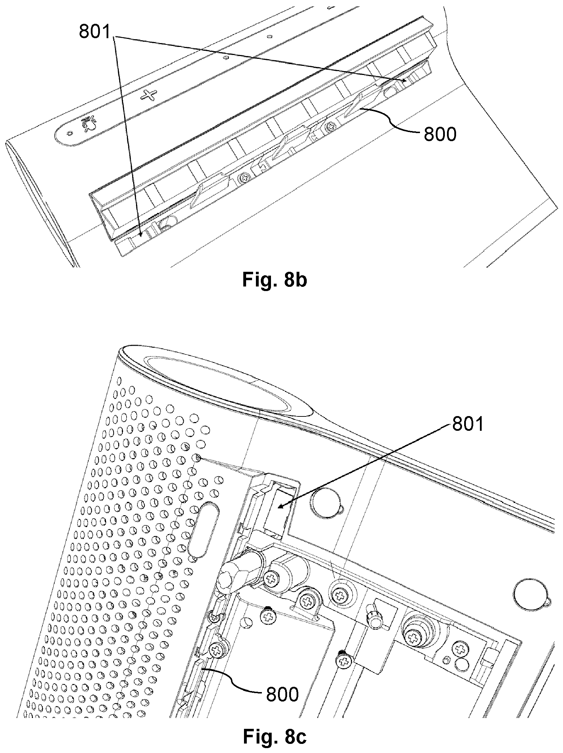

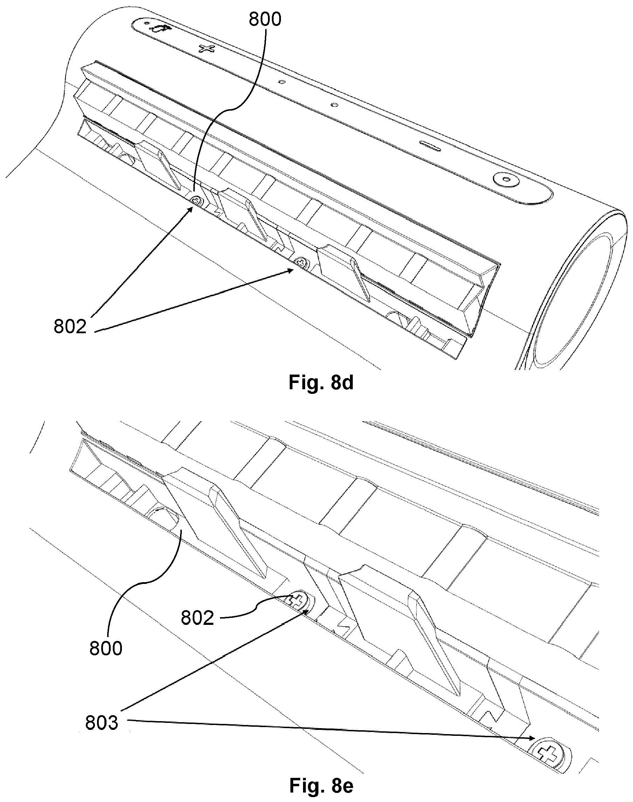

As indicated above, the back support 102 may be implemented in a detachable manner. The gaps 800 between the back support structure 102 and the main body 106 (at a mechanical interface) may be covered with Mylar material 801 to prevent any contaminants entering the electronics within the electronics housing 121 (see Figs. 8a to 8c). The one or more back support screws 802 may each have a rubber sealing 803 (see Figs. 8d and 8e).

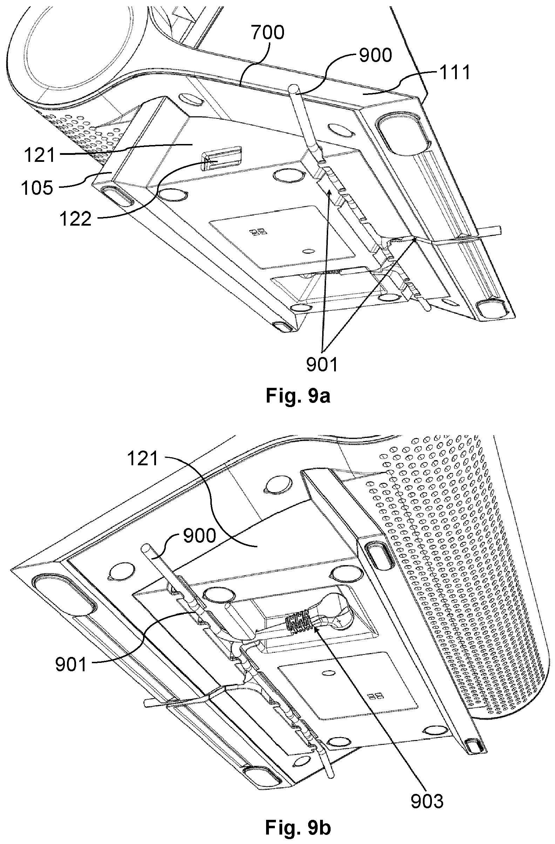

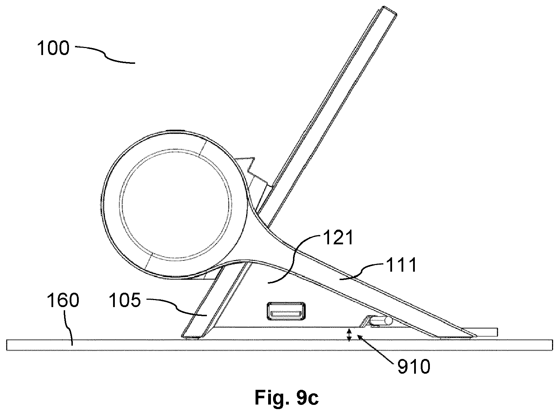

As illustrated in Figs. 9a to 9c, the power plug (notably the DC jack) 903 and the one or more cable channels 901 (for the power cable 900) may be raised from the ground 160 to prevent any damage due to water and/or liquid splashes. The power plug 903 may be placed within a cavity under the electronics housing 121, to protect the power plug 903 from direct contact. As illustrated in Fig. 9c, the electronics housing 121 may be raised from ground 160 by a minimum distance 910, in order to prevent water from entering the electronics housing 121.

In the present document different techniques for providing liquid protection in an efficient and reliable manner are described. As a result of this, the lifespan and/or the reliability of the docking station 100 may be increased. Furthermore, the comfort-of-use of the docking station 100 is improved, as it may be used in various different environments.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. An electronic device (100), in particular a docking station (100); wherein the electronic device (100) comprises
- a main body (106); wherein the main body (106) comprises an acoustic chamber with one or more speaker drivers (108, 107) for rendering an audio signal; and
- one or more feet (105, 111) extending downwards from the main body (106) and configured to hold the main body (106) above a ground (160); wherein the main body (106) comprises a speaker grill (608) covering the one or more speaker drivers (108, 107); wherein the speaker grill (608) comprises multiple grill holes (601) which are at least partially oriented towards the ground (160).

2. The electronic device (100) according to claim 1, wherein
- the grill holes (601) are oriented such that gravity causes liquid to flow from the acoustic chamber through the grill holes (601) towards an outer surface of the speaker grill (608), when the electronic device (100) is placed on the ground (160); and/or
- a longitudinal axis of the grill holes (601) is oriented at an angle between 45° and 90° with respect to the ground that the electronic device (100) is standing on.

3. The electronic device (100) according to any previous claim, wherein
- a housing of the main body (106) comprises an opening (204), in particular a window, for a light element (150) and/or for a gesture sensor (104) which are placed within the housing of the main body (106); and
- the electronic device (100) comprises a, in particular at least partially transparent, layer (210) at a surface of the housing of the main body (106), configured to cover the opening (204) such that the layer (210) is located between the light element (150) and/or the gesture sensor (104) and the opening (204); and
- in particular the layer (210) is attached to the surface of the housing using an adhesive.

4. The electronic device (100) according to any previous claim, wherein
- the main body (106) comprises one or more microphones (110) which are positioned behind one or more corresponding microphone openings within a housing of the main body (106);
- the one or more microphones (110) are each covered by a mesh (310), in particular a metallic mesh, configured to protect the one or more microphones (110) from water and/or dust; and
- the mesh (310) covering a microphone (110) is located between an inner surface of the housing of the main body (106) and the microphone (110).

5. The electronic device (100) according to any previous claim, wherein
- the electronic device (100) comprises one or more control elements (141, 142, 143, 144) at a housing of the main body (106) as part of a user interface of the electronic device (100);
- the one or more control elements (141, 142, 143, 144) are each implemented using a capacitive touch sensor (400) which is located at an inner surface of the housing of the main body (106); and
- in particular a control element (141, 142, 143, 144) comprises an embossed section at an outer surface of the housing of the main body (106), which is aligned with the corresponding touch sensor (400) at the inner surface of the housing of the main body (106).

6. The electronic device (100) according to any previous claim, wherein the electronic device (100) comprises a light guide (404) which is heat staked to a housing of the main body (106).

7. The electronic device (100) according to any previous claim, wherein
- a housing of the main body (106) is covered by a material having a VDI 30 texture; and/or
- the housing of the main body (106) is covered by an anti-fingerprint material.

8. The electronic device (100) according to any previous claim, wherein
- the electronic device (100) comprises a holder (102), notably a back support, extending upwards from the main body (106) and enabling a handheld user device to be placed onto the electronic device (100);
- the holder (102), in particular the back support, forms a support angle, notably a support angle between 45° and 70°, with respect to the ground (160) that the electronic device (100) is standing on; and
- the holder comprises, in particular is covered with, UV treated silicone.

9. The electronic device (100) according to any previous claim, wherein the acoustic chamber is sealed such that water entering a housing of the main body (106) through the speaker grill (608) cannot enter the acoustic chamber.

10. The electronic device (100) according to any previous claim, wherein
- the main body (106) extends along a longitudinal axis which is parallel to the ground (160) that the electronic device (100) is standing on;
- the electronic device (100) comprises a panel-shaped front foot (105) which extends downwards from the main body (106) at a front side of the electronic device (100);
- the electronic device (100) comprises a panel-shaped rear foot (111) which extends downwards from the main body (106) at a rear side of the electronic device (100);
- the electronic device (100) comprises an electronics housing (121) enclosing an electronics board (720) of the electronic device (100); and
- the electronics housing (121) is located below the panel-shaped front foot (105) and the panel-shaped rear foot (111), such that the panel-shaped front foot (105) and/or the panel-shaped rear foot (111) form a protective roof (700) for the electronics housing (121), in particular for a data and/or power interface (122) located at a wall of the electronics housing (121).

11. The electronic device (100) according to claim 10, wherein the panel-shaped front foot (105) and/or the panel-shaped rear foot (111) extend 2cm or more along the longitudinal axis of the main body (106) beyond the wall of the electronics housing (121), at which the data and/or power interface (122) is located, to form the protective roof (700).

12. The electronic device (100) according to any of claims 10 to 12, wherein the data and/or power interface (122) at the wall of the electronics housing (121) is positioned below the electronics board (720), when the electronic device (100) is standing on the ground (160).

13. The electronic device (100) according to any previous claim, wherein
- the electronic device (100) comprises a panel-shaped back support (102) extending upwards from the main body (106);
- the back support (102) is configured to be placed within a strip-shaped gap (800) that extends along a longitudinal axis of the main body (106) in a detachable manner; and
- the gap (800) is at least partially covered with Mylar material (801) configured to prevent water from entering an electronics housing (121) of the electronic device (100), which is positioned below the gap (800); and/or
- one or more screws (802) within the gap (800) exhibit a rubber sealing (803) configured to prevent water from entering the electronics housing (121).

14. The electronic device (100) according to any previous claim, wherein
- the electronic device (100) comprises an electronics housing (121) which is located between a front foot (105) and a rear foot (111) of the electronic device (100); and
- the front foot (105) and the rear foot (111) are such that a lower side of the electronics housing (121) is held at an elevation distance (910) from the ground (160) that the electronic device (100) is standing on.

15. The electronic device (100) according to any previous claim, wherein
- the electronic device (100) comprises an electronics housing (121) which is located between a front foot (105) and a rear foot (111) of the electronic device (100); and
- the electronic housing (121) comprises at a lower side which is oriented towards a ground (160) one or more cable channels (901) and/or a power plug (903) which are elevated from the ground (160).
